# EUROPÄISCHE PATENTANMELDUNG

(11) **EP 4 718 946 A1**
(43) Veröffentlichungstag der Anmeldung: **01.04.2026**
(21) Anmeldenummer: 25186698.4
(22) Anmeldetag: 01.07.2025
(51) Int. Cl.: H05B 6/06, H05B 6/14, H05B 6/40

(54) **VERFAHREN UND GERÄT ZUM ÜBERHITZUNGSGESCHÜTZTEN EIN- UND AUSSCHRUMPFEN VON WERKZEUGSCHÄFTEN IN UND AUS DER HÜLSENPARTIE EINES WERKZEUGHALTERS**

(30) Priorität: 30.09.2024 DE 102024128298
(71) Anmelder: Haimer GmbH, 86568 Hollenbach-Igenhausen (DE)
(72) Erfinder: Podhrázký, Antonín, 67531 Jemnice (CZ)

(57) **Zusammenfassung**

Nach dem Verfahren zum Betreiben eines Schrumpfgeräts mit einer Induktionsspule zum Aufheizen der Hülsenpartie eines Werkzeughalters unter Vermeidung von für die Hülsenpartie schädlichen Temperaturen ist vorgesehen, dass mehrere unterschiedliche Kenngrößen des Induktionsvorgangs überwacht werden, die sich während des Aufheizens verändern, insbesondere wenn die Hülsenpartie eine kritische Temperatur erreicht, und dass das Aufheizen der Hülse beendet wird, wenn mindestens eine der Kenngrößen einen zuvor festgelegten Grenzwert überschreitet.

## Beschreibung

### STAND DER TECHNIK

Schrumpffutter sind seit vielen Jahren fest als Werkzeughalter am Markt etabliert, die auch hohen Bearbeitungsanforderungen genügen.

Ein Kernbestandteil eines jeden Schrumpffutters ist seine Hülsenpartie, die den jeweiligen Werkzeugschaft im Betrieb im Presssitz hält. Denn die Hülsenpartie hat bei Raumtemperatur einen Innendurchmesser, der kleiner ist als der Außendurchmesser des einzuspannenden Werkzeugschafts.

Der Presssitz wird im Zuge des Einspannens des Werkzeugschafts hergestellt. Hierzu wird die Hülsenpartie induktiv erhitzt. Dadurch dehnt sich die Hülsenpartie soweit auf, dass ihr Innendurchmesser vorübergehend größer wird als der Außendurchmesser des einzuspannenden Werkzeugschafts. Dieser wird nun in die Hülsenpartie eingesetzt und wird von ihr nach dem gemeinsamen Wiederabkühlen mit hoher Kraft im Presssitz gehalten.

Das Wiederausschrumpfen des Werkzeugschafts erfolgt auf umgekehrtem Wege. Allerdings muss für das problemlose Herausziehen der Hülsenpartie der richtige Zeitpunkt abgepasst werden. Nämlich der, in dem die Hülsenpartie schon so heiß ist, dass sie sich weit genug aufgedehnt hat - aber noch nicht so viel Wärme von der Hülsenpartie in den Werkzeugschaft abgeflossen ist, dass sich auch dieser schon nennenswert zu erwärmen beginnt.

Ein entsprechendes Schrumpfgerät ist beispielsweise aus dem Patent DE 199 15 412 bekannt.

Bei einem solchen Schrumpfgerät besteht nicht zuletzt beim Ausschrumpfen eine gewisse Fehlergefahr. Es kommt gelegentlich vor, dass Bediener des Schrumpfgeräts den richten Zeitpunkt zum Herausziehen des Werkzeugschafts verpasst und feststellt, dass der Werkzeugschaft klemmt. In dem Irrtum, dass die Hülsenpartie noch nicht heiß genug ist, heizt er dann die Hülsenpartie weiter auf, die dann relativ schnell überhitzt und Schaden nimmt.

Um das bzw. ein Überhitzen im Allgemeinen zu vermeiden müssen vor Beginn des Schrumpfvorganges die richtigen Schrumpfparameter in Abhängigkeit von der zu erhitzenden Hülsenpartie eingestellt werden, darunter auch ein Grenzwert für die maximale Aufheizung des Schrumpffutters bzw. seiner Hülsenpartie. Das ist umständlich und fehlerträchtig.

Deswegen wird vielerorten mit einer automatischen Erkennung des Schrumpffutters und damit auch seiner Hülsenpartie gearbeitet, um dann in Abhängigkeit von der erkannten Hülsenpartie die Schrumpfparameter automatisch einzustellen.

Das funktioniert in der Praxis gut, wenn das Schrumpffutter entsprechend gekennzeichnet ist, beispielsweise durch eine Beschriftung oder einen Datenchip. Probleme treten aber auf, wenn (noch) nicht "gechipte" Schrumpffutter geschrumpft werden sollen oder Schrumpffutter von Anbietern, zu denen noch keine Schrumpffutterdaten in der Datenbank abgelegt sind, auf die die Schrumpfvorrichtung Zugriff hat.

Um auch insoweit unabhängig zu werden, ist auch schon daran gedacht worden, die Oberflächentemperatur der Hülsenpartie zu messen. Das führt aber nicht zu einer befriedigenden Lösung, weil es sich auf Grund des Skin-Effekts um einen hochdynamischen Erhitzungsvorgang handelt - im Rahmen dessen die reine Oberflächentemperatur durchaus schon überkritisch sein kann, lange bevor die entscheidende Temperatur tiefer im Inneren der Hülse erreicht wird. Darüber hinaus wäre eine solche Sensorik teuer und aufwändig.

### AUGABE

Der Erfindung liegt die Aufgabe zu Grunde ein betriebssicheres Verfahren zum Begrenzen der Aufheizung der Hülsenpartie eines Schrumpffutters anzugeben, um so ein Überhitzen der Hülsenpartie verhindern zu können.

### LÖSUNG

Erfindungsgemäß wird zur Lösung der Aufgabe ein neuartiges Verfahren zum Betreiben eines Schrumpfgeräts mit einer Induktionsspule vorgeschlagen, das die Hülsenpartie eines Werkzeughalters unter Vermeidung von für die Hülsenpartie kritischen Temperaturen aufheizt.

Das Verfahren zeichnet sich nach Maßgabe der Erfindung dadurch aus, dass mehrere Kenngrößen des Induktionsvorgangs - während des Aufheizens - überwacht werden; Kenngrößen, die sich während des Aufheizens verändern, insbesondere, wenn sich die Hülsenpartie einer kritischen Wert annähert. Dabei wird das Aufheizen der Hülse beendet, wenn mindestens eine der überwachten Kenngrößen einen zuvor für sie festgelegten Grenzwert ("Abschaltgrenzwert") überschreitet.

Die erfindungsgemäße Vorgehensweise mit mehreren heranzuziehenden Kenngrößen bietet eine deutlich erhöhte Gewähr dafür, dass es nicht zu einer Überhitzung der Hülsenpartie kommt. Dabei können die verschiedenen Kennwerte miteinander kombiniert werden, d.h**.** in Anzahl und Art beliebig, um so alle Unsicherheiten abdecken zu können.

Die Erfindung geht insbesondere dabei von der Erkenntnis aus, dass die Hülsenpartie in Abhängigkeit von ihrer Temperatur ihrerseits das Verhalten der Induktionsspule derart stark beeinflusst, dass es bestimmte elektrische Kenngrößen des Induktionsvorgangs gibt, bei deren Beobachtung man eine charakteristische Änderung der betreffenden Kenngröße erkennen kann, insbesondere sobald die Hülsenpartie im Begriff ist, eine kritische Temperatur zu erreichen.

Dabei kann auch der Umstand genutzt werden, dass sich das magnetische Verhalten, insbesondere die magnetische Permeabilität einer in die Induktionsspule eingebrachten Hülsenpartie und damit die Induktivität des Gesamtsystems, mit zunehmender Temperatur der Hülsenpartie ändert. Dieser Effekt wird umso deutlicher, je mehr sich die Temperatur der Hülsenpartie der Curie-Temperatur annähert. Dennoch kann man auch schon im Bereich der für Schrumpffutter üblichen Abschalttemperaturen im Bereich von 350°C erste nutzbare Effekte erkennen, um so darüber Grenzwerte für die Kenngrößen zu definieren.

Dominant ist im Temperaturbereich bis 350°C allerdings die Veränderung der elektrischen Eigenschaften des Gesamtsystems.

Vor diesem Hintergrund sei gesagt, dass der Begriff der "Kenngröße" erfindungsgemäß insbesondere sowohl primär magnetisch geprägte Kenngrößen umfassen kann, wie etwa die Induktivität der Induktionsspule, als auch primär elektrische geprägte Kenngrößen, wie z. B**.** den elektrischen Widerstand, Strom oder Spannung, - und auch äußere Faktoren, wie die Heizzeit, also die Dauer des Induktionsvorgangs.

Ansonsten gilt, dass eine Kenngröße des Induktionsvorgangs eine unmittelbar zu messende Kenngröße sein kann, wie z. B**.** der momentane Wirkstrom, die Spannung und eine Heizzeit, oder aber eine Kenngröße, die sich aus einem oder mehreren unterschiedlichen Messwerten durch Berechnung ergibt.

Mit der Erfindung kommt man nicht zuletzt dem Ziel einen großen Schritt näher, gerade auch solche Schrumpffutter sicher ein- und ausschrumpfen zu können, für die keine spezifischen Kenndaten zur Verfügung stehen - Kenndaten mittels derer sich schon vor dem Beginn des Ein- oder Ausschrumpfens festlegen lässt, wie intensiv und wie lange die Hülsenpartie von der Induktionsspule aufgeheizt werden darf.

Die im Rahmen dieser Erfindung herangezogenen Kenngrößen haben den Vorteil, dass sie auf Effekten beruhen, die weitgehend oder sogar im Wesentlichen unabhängig von der Größe und der genauen Geometrie des aktuell mit der Schrumpfvorrichtung bearbeiteten Schrumpffutters auftreten und beobachten lassen.

Darüber hinaus zeigen Kenngrößen in der Regel unterschiedliche Sensitivitäten, d.h. Kenngrößen reagieren zum Beispiel in bestimmten Temperaturbereichen unterschiedlich schnell, so dass gerade erst eine Kombination von mehreren Kenngrößen die oben erwähnte Sicherheit gewährleisten kann.

Damit ist ein entscheidender Schritt hin zu einer vollautonomen Erkennung getan, wann das Aufheizen der Hülsenpartie eines Schrumpffutters beendet werden muss.

Besonders günstig ist die Kombination des erfindungsgemäßen Verfahrens mit der Aufgabe einer anfänglichen automatischen Erkennung des Schrumpffutters, beispielsweise mittels eines anfänglichen elektrischen Testimpulses auf das Schrumpffutter, das entweder zu einer derart charakteristischen Rückmeldung führt, dass das betreffende Schrumpffutter komplett identifiziert werden kann oder jedenfalls Rückschlüsse über seine Masse und/oder Geometrie und/oder Abmessungen möglich sind. Mit einem solchen Testimpuls kann das erfindungsgemäße Verfahren weiter abgesichert werden.

Dieser Ansatz hilft nicht zuletzt in all den Fällen in denen ein Schrumpffutter geschrumpft werden soll zu dem keine genauen Daten vorliegen, die vom Schrumpfgerät eingelesen werden können, um die Schrumpfparameter einzustellen.

Erhält man hierüber, d.h**.** über Auswertung des erwähnten (anfänglichen elektrischen) Testimpulses, wie beispielsweise eine bestimmte Zeitdauer bis Erreichen eines vorgegebenen (Spulen- bzw. Wirk-)Stroms, (oder alternativ durch explizites Vorwissen), Informationen über Geometrie und Abmessungen des betreffenden Schrumpffutters, beispielsweise eine Länge des Schrumpffutters, kann diese Information weiter auch genutzt werden, um gegebenenfalls (Schrumpffutter) individuelle Abschaltgrenzwerte für die überwachten Kenngrößen - für den jeweiligen Fall bzw. das betreffende Schrumpffutter - festzulegen. Wo - beispielsweise - für ein ultrakurzes Schrumpffutter - ein erster Abschaltgrenzwert für eine Kenngröße "Betrag des momentanen Wirkstroms" (s. nachfolgend bei bevorzugten Optionen) festgelegt wird, kann - für ein (durchmessergleiches oder durchmesserähnliches) langes Schrumpffutter - ein zweiter, anderer Abschaltgrenzwert für die Kenngröße "Betrag des momentanen Wirkstroms" festgelegt werden.

### OPTIONEN ZUR AUSGESTALTUNG

Eine bevorzugt heranzuziehende elektrische Kenngröße ist der Betrag des momentanen Wirkstroms. Das Aufheizen wird dann beendet, wenn momentane Wirkstrom seit Beginn des Aufheizens um einen bestimmten Betrag sich geändert hat, insbesondere gefallen ist.

Der Erfinder hat hier erkannt, dass sich folgender Zusammenhang gut ausnutzen lässt:
Umso heißer die Hülsenpartie wird, desto größer ist die Gegeninduktivität die sie der zum Aufheizen verwendeten Induktionsspule entgegensetzt. Dadurch sinkt der momentane Wirkstrom ab, der von der Induktionsspule gezogen wird. Das bedeutet, dass der Schluss möglich ist, dass die Hülsenpartie noch keine kritische Temperatur anzunehmen droht, solange der momentane Wirkstrom noch nicht um einen bestimmten Betrag gefallen ist.

Eine andere oder zusätzliche Möglichkeit besteht darin, als Charakteristikum die momentane Änderung des Wirkstroms heranzuziehen. Das Aufheizen kann dann beispielsweise beendet werden, wenn sich der Wirkstrom nicht mehr um ein bestimmtes Mindestmaß ändert - oder gerade dann, wenn sich der Wirkstrom wieder (um ein bestimmtes (Mindest-)Maß) ändert.

Der Erfinder hat hier erkannt, dass sich zwar mit zunehmender Temperatur der momentane Wirkstrom zunächst immer weiter verringert, dass sich aber die Geschwindigkeit, mit der sich der Wirkstrom verringert, erkennbar abnimmt, wenn die Hülsenpartie im Begriff ist ihre kritische Temperatur zu erreichen.

Eine wiederum andere oder zusätzliche Möglichkeit besteht darin, die zweite Ableitung des momentanen Wirkstroms nach der Zeit als Charakteristikum heranzuziehen. Die zweite Ableitung desmomentanen Wirkstroms nach der Zeit geht gegen Null, wenn die Hülsenpartie im Begriff ist ihre kritische Temperatur zu erreichen.

Eine wiederum andere oder zusätzliche Möglichkeit besteht darin die Heizzeit (ab Beginn des Aufheizens) als Kenngröße zu verwenden. Der diesbezügliche Grenzwert definiert so eine maximale Aufheizzeit (, nach welcher das Heizvorgang beendet wird bzw. das Ausheizen abgeschaltet wird).

Ferner kann auch die momentane Induktivität des Gesamtsystems aus Induktionsspule und Schrumpffutter als Kenngröße verwendet werden, beispielsweise so, dass durch Testsignale bei laufender Erwärmung diese ermittelt wird - und diese Werte gegen Grenzwerte kontrolliert werden.

Weiterhin kann auch eine Energie aus einem seit Beginn des Aufheizenns geflossenen Stroms, insbesondere des Spulenstroms, und/oder das Integral des seit Beginn geflossenen Wirkstroms über der Zeit als Charakteristikum herangezogen werden, insbesondere auch dann, wenn anfänglich die ungefähre Größe des Schrumpffutters durch einen elektrischen Impuls ermittelt worden ist und daher eine Orientierung darüber vorliegt, welche elektrische Gesamtwirkenergie in etwa aufgebracht werden kann bevor die Hülsenpartie ihre kritische Temperatur erreicht.

Insbesondere hat es sich als vorteilhaft erwiesen, den Verlauf der Kenngrößen mit mathematischen Methoden vorauszusagen, z. B. unter Verwendung eines Kalman-Filters.

### FIGURENLISTE

- FIG 1: zeigt eine Induktionsspulen-Baueinheit gemäß einer Ausführungsform im Mittel-Längsschnitt;
- FIG 2: zeigt einen Schaltplan einer Schaltung zum Speisen einer Induktionsspule, die für die Umsetzung der Erfindung zum Einsatz kommen kann
- Fig. 3: zeigt eine Auswahl an erfindungsgemäß einsetzbaren Kenngrößen

### BEVORZUGTES AUSFÜHRUNGSBEISPIEL

Idealerweise wird das erfindungsgemäße Verfahren durch einen hier nicht figürlich illustrierten Anlernvorgang vorbereitet. Zu diesem Zweck kommen Schrumpffutter mit unterschiedlich großen und dicken Hülsenpartien zum Einsatz.

Meist ist es zweckmäßig die Hülsenpartie jedes dieser Schrumpffutter zunächst einem Testimpuls auszusetzen, der durch kurzzeitiges Bestromen der Induktionsspule erzeugt wird. Abhängig von ihrer Größe und ihrer Dicke setzt die Hülsenpartie dem Testimpuls eine mehr oder mindergroße Gegeninduktivität entgegen. Hieraus lässt sich ein recht zuverlässiger Rückschluss darauf ziehen, welche Dimensionen die Hülsenpartie hat und welches Verhalten sie bei der induktiven Erhitzung erwarten lässt.

Dies ermöglicht eine Plausibilitätskontrolle der momentanen Werte, die die für die Beurteilung des Absatzschaltpunkts herangezogenen Kenngrößen der Induktionsspule aktuell zeigen und erleichtert daher das erfindungsgemäße, sichere Abschalten.

In vielen Fällen ist es besonders günstig, das erfindungsgemäße Verfahren selbstlernend auszugestalten. Zu diesem Zweck bietet es sich an, an einem existierenden Schrumpfgerät für jeden Schrumpfvorgang die zur späteren Beurteilung, wann abgeschaltet werden muss, herangezogenen Kennwerte der Induktionsspule zu messen, abzuspeichern und - diese in Hinblick auf den Schrumpfvorgang - auszuwerten.

Besonders gut geht das an einem völlig manuell betriebenen Schrumpfgerät, da hier Bedienhandlungen des Bedieners erfassbar bzw. Rückmeldungen des Bedieners über den Schrumpfvorgang ermittelbar/erfassbar bzw. abfragbar sind.

Mit Hilfe dieser Rückmeldungen können Rückschlüsse auf die Qualität des Schrumpfvorgangs gezogen werden - und so auch Schrumpfparameter und Abschaltkriterien vorzugsweise unter Verwendung künstlicher Intelligenz optimiert werden können.

Hier wird beispielsweise so eingeschrumpft, dass der Gerätebediener den Werkzeugschaft händisch in Richtung der Werkzeugaufnahme der Hülsenpartie drückt und dann mit der anderen Hand die Induktionsspule aktiviert. Diese Tätigkeit findet ihr Ende, sobald sich die Hülsenpartie weit genug aufgedehnt hat und daher der Werkzeugschaft in die Werkzeugaufnahme der Hülsenpartie hineingleitet - woraufhin der Gerätebediener die Induktionsspule deaktiviert. Beim Wiederausschrumpfen wird sinngemäß verfahren. Der Gerätebediener zieht mit einer Hand an dem wieder auszuschrumpfenden Werkzeug, aktiviert mit der anderen Hand die Induktionsspule und stoppt den Vorgang sobald sich der Werkzeugschaft aus der Hülsenpartie herausziehen lässt.

Wenn auf diese Art und Weise eine große Anzahl von Kennlinien für die zur Beurteilung des Absatzschaltpunkts herangezogenen Kenngrößen der Induktionsspule aufgezeichnet worden sind, lässt sich sehr fein bestimmen bzw. verifizieren, welche Änderungen die Kennlinien der betreffenden Kenngrößen typischerweise zeigen, im Nahbereich des Abschaltzeitpunkts oder bei dessen Erreichen.

Weitere Optimierungsmöglichkeiten können dadurch realisiert werden, dass das Schrumpfgerät mittels geeigneter Sensorik Temperaturverläufe beim Schrumpfen von Schrumpffutter misst - und diese realen Temperaturverläufe zur Optimierung von Parametersätzen verwendet. Dies kann insbesondere und vorzugsweise wieder durch künstliche Intelligenz erfolgen.

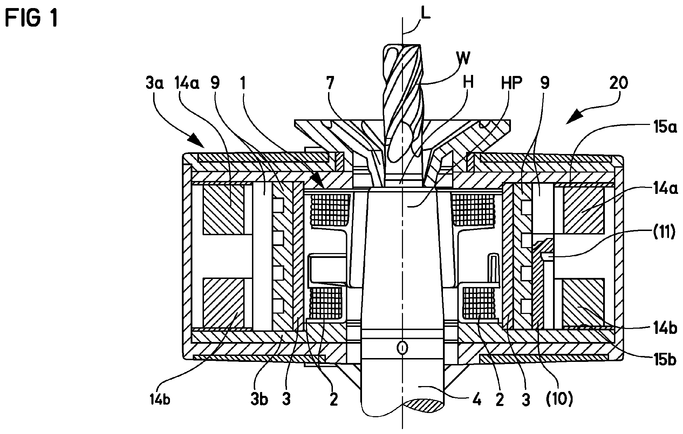

FIG 1 zeigt einen grundlegenden Aufbau einer Induktionsspulen-Baueinheit, welche aufgrund ihrer hier vorgesehenen Funktion hier auch als Schrumpfvorrichtung bezeichnet werden soll.

Wie FIG 1 verdeutlicht, sieht die Schrumpfvorrichtung eine Induktionsspule 1 mit einzelnen Windungen 2 vor, in deren Zentrum ein Werkzeughalter 4 eingeschoben wird, um den Halteschaft H eines Werkzeugs W, wie hier beispielsweise eines Fräsers, in die Hülsenpartie HP ein- oder auszuschrumpfen.

Das Funktionsprinzip, das dem Ein- und Ausschrumpfen zu Grunde liegt, ist näher in der deutschen Patentanmeldung DE 199 15 412 A1 beschrieben. Deren Inhalt wird hiermit zum Gegenstand dieser Anmeldung gemacht.

An ihrem Außenumfang ist die Induktionsspule 1 mit einem ersten Mantel 3 aus elektrisch nichtleitendem und magnetisch leitendem Material versehen. Typischerweise besteht der erste Mantel 3 entweder aus einem Ferrit oder einem Metallpulver bzw. Metallsinterwerkstoff, dessen einzelne Partikel elektrisch isolierend voneinander getrennt sind und die auf diese Art und Weise insgesamt gesehen im Wesentlichen magnetisch leitend und elektrisch nichtleitend sind.

Der erste Mantel 3 ist weiter so ausgeführt, dass er in Umfangsrichtung weitgehend in sich geschlossen ist, also die Umfangsfläche der Induktionsspule 1 größtenteils überdeckt, so, dass auch in der Theorie keinerlei "magnetische Lücken" verbleiben, abgesehen von irrelevanten lokalen Durchbrüchen, wie etwa einzelnen und/oder kleinen lokalen Bohrungen o. ä.

Wie FIG 1 weiter auch zeigt, hat bei der Schrumpfvorrichtung 20 die Abschirmung aus magnetisch leitendem und elektrisch nichtleitendem Material mit dem ersten Mantel 3 nicht bereits ihr Bewenden. Stattdessen schließt sich an mindestens einer, besser beiden Stirnseiten des ersten Mantels 3 eine magnetische Abdeckung 3a, 3b aus dem besagten Material an, die im Regelfall den ersten Mantel 3 kontaktieren. Auf der dem Werkzeughalter 4 abgewandten Stirnseite der Induktionsspule 1 ist die magnetische Abdeckung 3a vorzugsweise als ganz oder bevorzugt abschnittweise auswechselbarer Polschuh ausgebildet, d. h. als ringförmiges Gebilde mit einer zentralen Öffnung, die einen Durchlass 7 für das ein- oder auszuspannende Werkzeug W bildet.

Auf der dem Werkzeughalter 4 zugewandten Stirnseite der Induktionsspule 1 ist die magnetische Abdeckung 3b vorzugsweise als in sich ebene Ringscheibe ausgestaltet, die die Wicklungen der Induktionsspule 1 idealerweise vollständig übergreift und einen zentralen Durchlass für die Hülsenpartie HP aufweist.

Um die Abschirmung noch weiter zu verbessern, sind, wie FIG 1 auch zeigt, die Induktionsspule 1 und ihr erster Mantel 3 an dessen Außenumfang von einem zweiten Mantel 9 umgeben - und zwar so, dass der erste Mantel 3 und der zweite Mantel 9 einander berühren, idealerweise auf dem überwiegenden bzw. gesamten Teil ihrer einander zugewandten Umfangsflächen.

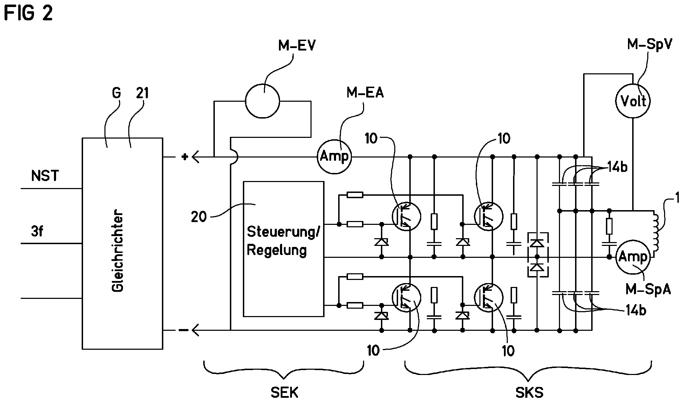

FIG 2 zeigt die zugehörige Schaltung. Sie weist einen Schwingkreis SKS auf (vgl. FIG 2).

Bei dem Schwingkreis SKS schwingt der überwiegende Teil der benötigten Energie periodisch (hochfrequent) zwischen der zum Aufheizen der Hülsenpartie eingesetzten Induktionsspule 1 und einer Kondensatoreinheit 14a, 14b hin- und her. Dadurch muss in jeder Periode bzw. periodisch nur die dem Schwingkreis SKS durch seine Heizleistung und seine sonstige Verlustleistung entzogene Energie nachgespeist werden. Somit entfallen die bisherigen, sehr hohen Verluste.

Die die Induktionsspule 1 speisende Leistungselektronik wird, wie FIG 2 zeigt, eingangsseitig mit dem allgemein verfügbaren Netzstrom NST, der in Europa (dreiphasig Drehstrom, 3f) 400 V / 50 Hz (in andern Ländern entsprechende Werte) beträgt, gespeist. Der aus dem Netz bezogene Strom wird, wie in FIG 2 verdeutlicht, von einem Gleichrichter G 21 in Gleichstrom umgewandelt, der seinerseits durch den oder die Glättungskondensatoren geglättet wird (nicht gezeigt).

Mit diesem Gleichstrom wird, wie FIG 2 weiter auch verdeutlicht, der eigentliche Schwingkreis SKS gespeist.

Das Rückgrat des Schwingkreises SKS bilden die Leistungshalbleiterbauelemente 10, die Schwingkreiskondensatoren 14b und die zum Ein- und Ausschrumpfen dienende Induktionsspule 1.

Gesteuert bzw. geregelt wird der Schwingkreis SKS von Steuerelektronik SEK, die mit Gleichstrom aus dem Gleichrichter G gespeist wird.

Die Leistungshalbleiterbauelemente 10 werden vorzugsweise durch Transistoren des Typs "Insulated-Gate Bipolar Transistor" kurz IGBT verwirklicht.

Die Steuerelektronik SEK schaltet die Leistungshalbleiterbauelemente 10 mit einer Frequenz, die die sich am Schwingkreis SKS einstellende Arbeitsfrequenz vorgibt.

Wichtig ist, dass der Schwingkreis SKS niemals genau in Resonanz arbeitet. Dies würde hier zur raschen Zerstörung der Leistungshalbleiterbauelemente 10 durch die Spannungsspitzen führen. Stattdessen ist die Steuerelektronik SEK so gestaltet, dass sie die Leistungselektronik bzw. deren Schwingkreis SKS in einem vorgebbaren Arbeitsbereich betreibt, der lediglich nahe der Resonanz bzw. Eigenfrequenz des Systems liegt.

Vorzugsweise wird der Schwingkreis (mittels der Steuerung 20) 10 so gesteuert bzw. geregelt, dass gilt 0,9 ≤ cos p ≤ 0,99. Besonders günstig sind Werte, die im Bereich 0,95 ≤ cos p ≤ 0,98 liegen. Dies führt nochmals zu einer Vermeidung von Spannungsspitzen und leistet daher der Miniaturisierung weiteren Vorschub.

Um das Schrumpfgerat 1 mit bestimmter Betriebssicherheit - möglichst automatisiert - zu betreiben, ist die Schrumpfvorrichtung mit einer automatischen Erwärmungssteuerung/-regelung ausgestattet, welche einen automatisierten Schrumpfbetrieb ermöglicht. Diese Erwärmungssteuerung/-regelung wird durch eine entsprechende Steuerung bzw. Regelung 20 bei der Schrumpfvorrichtung umgesetzt, welche - grundsätzlich - auf einer Analyse von - gemessenem - Spulenstrom M-SpA, Spulenspannung M-SpV und/oder Eingangsstrom M-EA und/oder Eingangsspannung M-EV bzw. deren zeitlichen Verläufen basiert.

Um Spulenstrom (M-SpA), Spulenspannung (M-SpV) und Eingangsstrom (M-EA) und Eingangsspannung (M-EV) zu messen, sieht die Schaltung, wie FIG 2 auch zeigt, entsprechend Strom-/Spannungsmessgeräte M-SpA (Spulenstrom), M-SpV (Spulenspannung) bzw. M-EA (Eingangsstrom) bzw. M-EV (Eingangsspannung) vor, welche an entsprechend gezeigten Positionen und in entsprechender Weise in der Schaltung verbaut sind.

Erfindungsgemäß wird wie folgt verfahren:
Vor Beginn der Erwärmung der in die Induktionsspule eingebrachten Hülsenpartie wird bevorzugt zunächst - automatisiert - die Geometrie bzw. der Außendurchmesser der in die Induktionsspule eingebrachten Hülsenpartie ermittelt.

Hierzu wird die Hülsenpartie zunächst einem Testimpuls der Induktionsspule ausgesetzt, der durch kurzzeitiges Bestromen der Induktionsspule erzeugt wird. Abhängig von ihrer Größe und ihrer Dicke setzt die Hülsenpartie dem Testimpuls eine mehr oder minder große Gegeninduktivität entgegen. Dieses Verfahren zum Generieren eines "Fingerabdrucks" einer Hülsenpartie ist als solches bekannt.

Dieser "Fingerabdruck" wird ausgewertet und mit der jeweiligen Gegeninduktivität verglichen, die quasi als "Fingerabdruck" für andere Hülsenpartien in der Datenbank abgespeichert ist. In vielen Fällen kann so erkannt werden, um was für ein Schrumpffutter es sich handelt, so dass dann a priori der hierzu passende Parametersatz - mit zu verwendenden Schrumpfparameter inklusive zugehöriger Überhitzungsschutzlogik (d.h., welche Kennwerte mit welchen Grenzwerten) - ausgewählt und voreingestellt werden kann.

Die gleich nochmal näher zu erläuternde, erfindungsgemäße Vorgehensweise dient dann nur zur zusätzlichen Absicherung, dass die maximal zulässige Erhitzung der Hülsenpartie nicht überschritten wird. Die Absicherung funktioniert in diesem Fall mit höchster Güte, weil dann ja auf abgespeicherte Schrumpffutter spezifisch festgelegte Informationen zurückgegriffen werden kann, etwa wie groß der Abfall des momentanen Wirkstroms sein darf, wieviel Heizenergie insgesamt maximal zugeführt werden darf, usw. (Kennwerte und deren Grenzwerte).

Sofern kein passender Parametersatz gefunden werden kann, kann mit Hilfe der Erfindung gleichwohl geschrumpft werden, ohne auf eine weitgehende Absicherung gegen Überhitzung der Hülsenpartie verzichten zu müssen.

Vorzugsweise wird dann die "Antwort" bzw. der Fingerabdruck der Hülsenpartie des zu schrumpfenden Futters zumindest dahingehend ausgewertet, dass daraus ein Rückschluss auf die Größe/Masse und/oder Geometrie und/oder Gestalt der als solche unbekannte Hülsenpartie gezogen wird - und darüber ein Parametersatz "geschätzt".

Eine besonders bevorzugte Ausführungsform des erfindungsgemäßen Schrumpfgeräts ist sodann so ausgerüstet, dass es daraufhin die maximale Heizenergie festlegt, die der Hülsenpartie mutmaßlich zugeführt werden kann, bevor sie überhitzt und dass der Maximalbetrag festgesetzt wird, um den der momentane Wirkstrom bei einer Hülsenpartie, wie der mutmaßlich im Schrumpfgerät befindlichen, abgefallen sein darf, bevor Überhitzung der Hülsenpartie droht.

Dann beginnt der Aufheizvorgang der Hülsenpartie. Dabei wird der momentane Wirkstrom gemessen und abgeglichen. Der Aufheizvorgang wird beendet bzw. seine weitere Fortsetzung wird verhindert, wenn der momentane Wirkstrom soweit abgefallen ist, wie das für den Fall abgespeichert ist, dass eine dem Fingerabdruck nach vergleichbare Hülsenpartie kurz vor Überhitzung steht. Wird schon früher das Integral des momentanen Wirkstroms über die Zeit so groß, dass davon auszugehen gehen ist, dass eine Hülsenpartie mit dem eingangs genommenen Fingerabdruck zu Überhitzen beginnt, weil die maximal zulässige Heizenergie bereits zugeführt worden ist, dann wird der Heizvorgang ebenfalls beendet bzw. eine weitere Fortsetzung verhindert - ohne Rücksicht darauf, dass der momentane Wirkstrom noch nicht soweit abgefallen ist, wie das eigentlich der Fall sein müsste, wenn die mutmaßliche Hülsenpartie kurz vor Überhitzung steht.

Wenn noch sicherer gegangen werden soll, dann wird zu den zwei ohnehin schon berücksichtigten Kenngrößen zusätzlich mindestens eine weitere Kenngröße des Induktionsvorgangs hinzugezogen und berücksichtigt, sodass der Heizvorgang beendet wird, sobald auch nur einer dieser drei oder mehr Kenngrößen einen Wert erreicht hat, aus dem zu schließen ist, dass die Hülsenpartie kurz vor der Überhitzung steht.

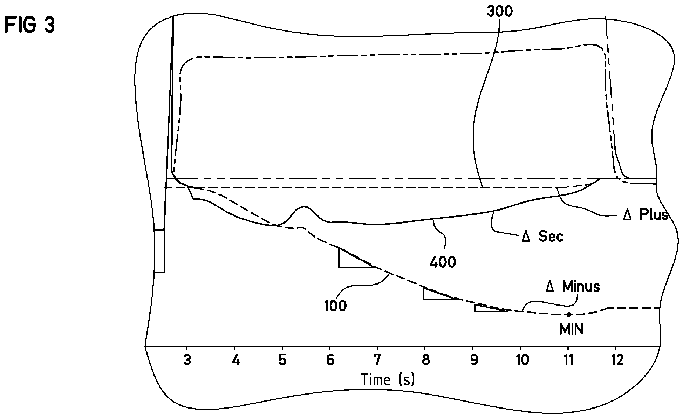

Zur weiteren Illustration dieses Ansatzes darf auf die Figur 3 verwiesen werden.

Die Kurve 100 stellt den momentanen Wert des Wirkstroms dar, aufgetragen über der Zeit. Man kann gut erkennen, dass der momentan fließende Wirkstrom mit zunehmender Zeit, d. h**.** mit zunehmender Erhitzung der Hülsenpartie, deutlich abnimmt. Dieses Verhalten zeigen alle Hülsenpartien, egal ob klein oder groß, nur die Betragswerte sind unterschiedlich.

Also kann der Betrag, um den der momentane Wirkstrom abgenommen hat als Kenngröße verwendet werden, um eine Abschaltung auszulösen. Dies jedenfalls dann, wenn sich aufgrund des Eingangs ermittelten Fingerabdrucks der zu schrumpfenden Hülsenpartie plausibel auf deren Geometrie rückschließen lässt.

Die erste Ableitung der Kurve 100 nach der Zeit ist durch die Steigungsdreiecke an die Kurve 100 verdeutlicht (vgl. Fig. 1, drei Steigungsdreiecke eingezeichnet). Sie ist ein Maß dafür, dass sich die Abnahme des momentanen Wirkstroms abflacht bzw. vollständig einstellt, wie das kurz vor Beginn der Überhitzung einer Hülsenpartie der Fall ist. Auch dieses Abflachen als solches zeigen alle Hülsenpartien, denn das Gegen-Null-gehen der Tangenten ist gut zu detektieren. Dabei ist es, generell gesagt, besonders bevorzugt auf die Tangenten zurückzugreifen. Dies deshalb, weil die Abflachung immer zu beobachten ist und zwar unabhängig von der Masse oder der Geometrie der aktuellen Hülsenpartie. Hier hat man es also mit einem Kennwert zu tun, der auch dann sicher genutzt werden kann, wenn sich mit dem eingangs beschriebene Testimpuls kein vernünftig zuordenbarer Fingerabdruck der zu schrumpfenden Hülsenpartie erzeugen lässt, sodass eine Abschätzung, wie weit im konkreten Fall der Betrag des momentanen Wirkstroms abfallen darf, schwierig ist.

Die Kurve 300 wertet nur den Anstieg des Wirkstroms aus. Sie ist eine Aussage dafür, wann der Wirkstrom wieder ansteigt, was die Nähe der kritischen Temperatur bzw. deren Überschreiten kennzeichnet. Auch dies stellt eine zuverlässige Kenngrößen dar, an Hand der sich sehen lässt, ob eine Hülsenpartie, unabhängig von ihrer Größe oder Beschaffenheit, kurz vor der Überhitzung steht. Denn dann, wenn das der Fall ist, geht die Kurve 300 gegen null.

Die Kurve 400 ist - mittels eines Kalman-Filters - aus der Kurve 100 errechnet worden und stellt die zweite Ableitung der Kurve 100 dar. Sie ist eine Aussage dafür, wie schnell sich die Steilheit der Kurve 100 verringert. Kalman-Filter als solche sind wohlbekannt. Neuartig ist aber die Verwendung eines Kalman-Filters im hiesigen Zusammenhang.

Der Kalman-Filter dient dazu, nicht direkt messbare Systemgrößen zu schätzen, während die Fehler der Messungen optimal reduziert werden. Bei dynamischen Größen kann dem Filter ein mathematisches Modell als Nebenbedingung hinzugefügt werden, um dynamische Beziehungen zwischen den Systemgrößen zu berücksichtigen.

Auch hiermit lässt sich sehr zuverlässig ein Überhitzen der Hülsenpartie verhindern. Aus dem Fingerabdruck der nach der eingangs geschilderten Verfahren von der unbekannten Hülsenpartie gewonnen wird kann geschlossen werden, wie die Hülse in etwa beschaffen ist und wie weit daher der momentane Wirkstrom absinken wird, wenn die Hülse kurz vor der Überhitzung steht, sodass dieses Kriterium als abschattet genutzt werden kann.

Zur Sicherheit wird aber gleichzeitig darauf geachtet, dass rechtzeitig erkannt wird, wenn sich die Kurve des momentanen Wirkstrom uns stark abgeflacht war dann, selbst wenn Absolutwert des momentanen Wirkstrom so nicht soweit abgefallen ist das eigentlich nach dem Fingerabdruck der Hülsenpartie zu erwarten gewesen wäre.

Als zusätzliche Absicherung kann dann auch noch das Integral des momentanen Wirkstroms über der Zeit verwendet werden. Damit kommt auch dann eine Abschaltung zustande, wenn die beiden anderen Kriterien versagen sollten, weil aktuell weder der absolute Abfall des aktuellen Wirkstroms noch die rechnerisch zugeführte Heizenergie so sind, dass eigentlich schon ein Überhitzen zu erwarten wäre.

## Patentansprüche

1. Verfahren zum Betreiben eines Schrumpfgeräts mit einer Induktionsspule zum Aufheizen der Hülsenpartie eines Werkzeughalters unter Vermeidung von für die Hülsenpartie schädlichen Temperaturen
**dadurch gekennzeichnet, dass**
mehrere unterschiedliche Kenngrößen des Induktionsvorgangs überwacht werden, die sich während des Aufheizens verändern, insbesondere wenn die Hülsenpartie eine kritische Temperatur erreicht,
und das Aufheizen der Hülse beendet wird, wenn mindestens eine der Kenngrößen einen zuvor festgelegten Grenzwert überschreitet.

2. Verfahren nach Anspruch 1, **dadurch gekennzeichnet, dass** eine der Kenngrößen der Wirkstrom ist und das Aufheizen beendet wird, wenn der momentane Wirkstrom seit Beginn des Aufheizens um einen bestimmten Betrag gefallen ist.

3. Verfahren nach einem der vorhergehenden Ansprüche,
**dadurch gekennzeichnet, dass** eine der Kenngrößen die momentane Änderung des Wirkstroms ist und das Aufheizen beendet wird, wenn sich der Wirkstrom nicht mehr um ein bestimmtes Mindestmaß ändert.

4. Verfahren nach einem der vorhergehenden Ansprüche,
**dadurch gekennzeichnet, dass** eine der Kenngrößen die momentane Änderungsgeschwindigkeit des Wirkstroms ist und das Aufheizen beendet wird, wenn sich der Wirkstrom nicht mit einer bestimmten Mindestgeschwindigkeit ändert.

5. Verfahren nach einem der vorhergehenden Ansprüche,
**dadurch gekennzeichnet, dass** eine der Kenngrößen eine Energie aus einem seit Beginn des Aufheizenns geflossenen Stroms, insbesondere des Spulenstroms, und/oder das Integral des seit Beginn des Aufheizens geflossenen momentanen Wirkstroms über der Zeit ist.

6. Verfahren nach einem der vorhergehenden Ansprüche,
**dadurch gekennzeichnet, dass** eine der Kenngrößen eine Heizzeit seit Beginn des Aufheizens ist.

7. Verfahren nach einem der vorhergehenden Ansprüche,
**dadurch gekennzeichnet, dass** eine momentane Induktivität des Gesamtsystems aus Induktionsspule und Schrumpffutter als Kenngröße verwendet wird, insbesondere so, dass durch Testsignale bei laufender Erwärmung diese ermittelt wird und diese gegen einen Grenzwert kontrolliert wird.

8. Verfahren nach einem der vorhergehenden Ansprüche,
**dadurch gekennzeichnet, dass** eine der Kenngrößen der momentane Phasenwinkel zwischen dem momentanen Wirkstrom und der ihn treibenden Spannung ist.

9. Verfahren nach einem der vorhergehenden Ansprüche,
**dadurch gekennzeichnet, dass** eine der Kenngrößen die momentane Induktivität der Induktionsspule ist.

10. Verfahren nach einem der vorhergehenden Ansprüche, **dadurch gekennzeichnet, dass** das von mindestens einer elektrischen Kenngröße gelieferte Messignal vor seiner Auswertung einen digitalen Glättungsfilter durchläuft, bevorzugt einen Kalman-Filter.

11. Verfahren nach einem der vorhergehenden Ansprüche, **dadurch gekennzeichnet, dass** die Identität des Schrumpffutters oder zumindest die Charakteristik der Hülsenpartie bzw. seine Masse/Dicke und/oder Größe und/oder Geometrie vorab mittels eines Testimpulses ermittelt wird.

12. Verfahren nach einem der vorhergehenden Ansprüche,
**dadurch gekennzeichnet, dass** Parametersätze auf Basis von realen Daten aus Schrumpfvorgängen, insbesondere Temperaturverläufe und/oder Rückmeldungen von Benutzern und/oder Benutzerverhalten, insbesondere unter Verwendung von künstlicher Intelligenz optimiert werden.

13. Schrumpfgerät zur Durchführung des Verfahrens nach seinem der vorhergehenden Ansprüche 1 bis 12 mit einer Induktionsspule und mindestens einem Strom- und/oder Spannungsdetektor entweder in einem Zwischenkreis eines zur Versorgung der Spulenkreises mit elektrischer Energie dienenden Frequenzumrichters und/oder in einem Spulenkreis und einem Komparator, der mindestens zwei Kenngrößen des Induktionsvorgangs mit hierfür vorgegebenen Grenzwerten abgleicht und bei einer Grenzwertüberschreitung für mindestens eine Kenngröße das Heizen der Spule beendet bzw. das Weiterheizen der Spule verhindert.
